# EUROPEAN PATENT SPECIFICATION

(11) **EP 4 333 151 B1**
(45) Date of publication and mention of the grant of the patent: **11.03.2026**
(21) Application number: 21963525.7
(22) Date of filing: 09.11.2021
(51) Int. Cl.: H01M 10/0583, B65H 45/101, H01M 10/04, H01M 50/466, H01M 10/0525

(54) **ELECTRODE ASSEMBLY AND MANUFACTURING METHOD THEREFOR, BATTERY CELL, BATTERY, AND ELECTRIC APPARATUS**
ELEKTRODENANORDNUNG UND HERSTELLUNGSVERFAHREN DAFÜR, BATTERIEZELLE, BATTERIE UND ELEKTRISCHE VORRICHTUNG
ENSEMBLE ÉLECTRODE ET SON PROCÉDÉ DE FABRICATION, CELLULE DE BATTERIE, BATTERIE ET DISPOSITIF ÉLECTRIQUE

(43) Date of publication of application: 06.03.2024
(60) Divisional application: 26154189.0
(73) Proprietor: Contemporary Amperex Technology (Hong Kong) Limited, Central, Central And Western District (HK)
(72) Inventor: ZHANG, Nan, Ningde, Fujian 352100 (CN); WANG, Hong, Ningde, Fujian 352100 (CN); LIU, Jiang, Ningde, Fujian 352100 (CN); CHEN, Wenwei, Ningde, Fujian 352100 (CN)
(74) Representative: Gong, Jinping
(86) International application number: PCT/CN2021/129657
(87) International publication number: WO 2023/082068

(56) References cited:
- CN-A- 105 932 338
- CN-A- 106 252 732
- CN-A- 106 252 732
- CN-A- 113 078 346
- CN-A- 113 224 391
- CN-U- 213 340 434
- CN-U- 213 340 434
- US-A1- 2009 029 259
- US-A1- 2021 320 323

## Description

### TECHNICAL FIELD

This application relates to the field of energy storage device technologies, and in particular, to an electrode assembly as specified in any of claims 1-8, and a manufacturing method thereof as specified in any of claims 9-10, a battery cell as specified in claim 11, a battery as specified in claim 12, and an electric apparatus as specified in claim 13.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development. It is essential to prevent batteries from short circuits during use, enhance the electrochemical performance of batteries, and improve the safety and reliability of the batteries. CN106252732A relates to a method for manufacturing a lithium-ion power battery. CN213340434U relates to an electrode assembly of a battery cell. US2009/029259A1 relates to a battery. US2021/320323A1 relates to a solid-state battery.

### SUMMARY

To solve the above problems, this application provides an electrode assembly and a manufacturing method thereof, a battery cell, a battery, and an electric apparatus, to enhance the electrochemical performance of batteries and improve the safety and reliability of batteries.

A first aspect of embodiments of this application provides an electrode assembly as specified in any of claims 1-8 including: a first electrode plate; and separators provided on two sides of the first electrode plate in a thickness direction of the electrode plate and stacked with the first electrode plate; where in an unfolded state of the electrode assembly, the separator has first edge portions each exceeding an end of the first electrode plate in a length direction of the separator, and the separator has second edge portions each exceeding an end of the first electrode plate in a height direction of the separator; and in the thickness direction of the electrode plate, the corresponding first edge portions on two sides of the first electrode plate are at least partly hot-melt connected to form first hot-melted segments, and the corresponding second edge portions on two sides of the first electrode plate are at least partly hot-melt connected to form second hot-melted segments; wherein the first electrode plate includes multiple bending segments and multiple stacked first stacking segments, each bending segment connecting two adjacent first stacking segments; and in the unfolded state of the electrode assembly, the second hot-melted segments are spaced from each other and located at positions corresponding to the bending segments in the length direction of the separator; and wherein in the length direction of the separator, length of the second hot-melted segment is larger than length of the bending segment.

In the foregoing technical solution, the first edge portions and second edge portions exceeding the first electrode plate are at least partly hot-melt connected separately to enclose or semi-enclose the first electrode plate in the separators. The first electrode plate and the separators are zigzag stacked, which can prevent the separator from turning over while such turnover makes the first electrode plate come into contact with a second electrode plate, reducing the risk of a short circuit in the electrode assembly. Moreover, the separators on two sides of the first electrode plate have gone through hot-melt connection before being stacked into the electrode assembly. Therefore, no more hot-melting needs to be performed on the exceeding parts of the separators after stacking, thereby improving the production efficiency and preventing the separators from shrinkage or damage caused by over-hot-melting.

In the foregoing technical solution, the second edge portions corresponding to the bending segments are hot-melt connected to form the second hot-melted segments so that the second edge portions corresponding to the bending segments do not crease or turn over due to repeated bending operations during the stacking operation, thereby reducing the risk of a short circuit in the electrode assembly.

In the foregoing technical solution, the bending segment is entirely enclosed in the second hot-melted segment without exposing any part. Therefore, during the stacking operation, none of the second edge portions corresponding to the bending segments in the length direction of the separator has a risk of turnover while such turnover exposes the bending segment.

In some embodiments, in the height direction of the separator, the second hot-melted segments are symmetric with respect to the bending segment.

The foregoing technical solution can make each of ends of the bending segment on two sides in height direction of the separator be entirely enclosed in the separator via the second hot-melted segment, and therefore none of the second edge portions corresponding to the bending segment on two sides in the height direction of the separator has the risk of turnover while such turnover exposes the bending segment.

In some embodiments, in the thickness direction of the electrode plate, the bending segment includes a thinned portion or a cutoff portion to facilitate bending of the first electrode plate.

In some embodiments, when the bending segment includes a thinned portion, length of the second hot-melted segment in the length direction of the separator is 3-50 mm.

In the foregoing technical solution, the thinned portion can be enclosed and the risk of turnover of the second edge portions can be reduced.

In some embodiments, when the bending segment includes a cutoff portion, length of the second hot-melted segment in the length direction of the separator is 5-50 mm.

In the foregoing technical solution, two side ends of the cutoff portion in the length direction of the separator can be entirely or partially enclosed, reducing the risk of turnover of the second edge portion corresponding to the cutoff portion.

In some embodiments, in the height direction of the separator, one side end of the first electrode plate has first tabs extending through the separators, and the second hot-melted segments avoid the first tabs.

In the foregoing technical solution, the second edge portions on two sides of the first electrode plate in the thickness direction of the electrode plate can be hot-melt connected.

In some embodiments, regions, avoiding the first tabs, of the second edge portions on two sides of the first electrode plate in the thickness direction of the electrode plate are all hot-melt connected to form the second hot-melted segments.

In the foregoing technical solution, because the separator itself is adhesive, the second edge portions adhere to the first tabs so that one side end of the first electrode plate having the first tabs in the height direction of the separator are entirely enclosed in the separators on two sides in the thickness direction of the electrode plate, thereby reducing the risk of a short circuit in the electrode assembly caused by turnover of the second edge portions on this side.

In some embodiments, the corresponding first edge portions on two sides of the first electrode plate in the thickness direction of the electrode plate are entirely hot-melt connected to form the first hot-melted segments.

In the foregoing technical solution, hot-melt connection of the entire corresponding first edge portions on two sides in the thickness direction of the electrode plate can sufficiently reduce the risk of a short circuit in the electrode assembly caused by turnover of the entire first edge portions.

In some embodiments, length of the first hot-melted segment in the length direction of the separator is 1-5 mm, and height of the second hot-melted segment in the height direction of the separator is 1-5 mm.

In the foregoing technical solution, the strength of the first hot-melted segment and the second hot-melted segment can be guaranteed, reducing the risk of cracking of the first hot-melted segment and second hot-melted segment during the stacking operation.

In some embodiments, the first electrode plate is an anode plate.

In the foregoing technical solution, having the anode plate enclosed within the separators as the first electrode plate can reduce the risk of corrosion to a housing caused by powder falling of an anode active substance material.

In some embodiments, the electrode assembly further includes a second electrode plate opposite to the first electrode plate in polarity, where the second electrode plate includes multiple second stacking segments, and in a stacked state of the electrode assembly, each second stacking segment is provided between two adjacent first stacking segments.

The foregoing technical solution enables the electrode assembly formed to better meet use requirements and optimizes the electrical performance of the electrode assembly.

A second aspect of the embodiments of this application provides a manufacturing method of electrode assembly as specified in any of claims 9-10 including the following steps: providing a first electrode plate; providing separators; disposing the separators on two sides of the first electrode plate in a thickness direction of the electrode plate and stacking the separators and the first electrode plate; providing first edge portions each exceeding an end of the first electrode plate in a length direction of the separator on the separator, and providing second edge portions each exceeding an end of the first electrode plate in a height direction of the separator on the separator; and in the thickness direction of the electrode plate, hot-melt connecting at least part of the corresponding first edge portions on two sides of the first electrode plate to form first hot-melted segments, and hot-melt connecting at least part of the corresponding second edge portions on two sides of the first electrode plate to form second hot-melted segments.

In some embodiments, hot pressing is used for hot-melt connection in the manufacturing method of electrode assembly.

In some embodiments, the step of providing a first electrode plate includes: forming multiple thinned portions on the first electrode plate through indenting or laser cleaning.

In some embodiments, the manufacturing method of electrode assembly further includes the following steps: stacking the separators and the first electrode plate together, bending at the multiple thinned portions to form multiple bending segments, and forming multiple first stacking segments stacked between the multiple bending segments.

In some embodiments, the manufacturing method of electrode assembly further includes: providing a second electrode plate and disposing the second electrode plate between stacked adjacent first stacking segments.

A third aspect of the embodiments of this application provides a battery cell as specified in claim 11 including the electrode assembly according to the first aspect or including an electrode assembly manufactured by using the manufacturing method of electrode assembly according to the second aspect.

A fourth aspect of the embodiments of this application provides a battery as specified in claim 12 including multiple battery cells according to the third aspect.

A fifth aspect of the embodiments of this application provides an electric apparatus as specified in claim 13 including the battery according to the fourth aspect, where the battery is configured to supply electrical energy.

It should be understood that the foregoing general description and the following detailed description are only exemplary and are not intended to limit this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely specific embodiments of this application, and persons of ordinary skill in the art may derive other embodiments from the following accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery module according to an embodiment of this application;
FIG. 4 is a schematic exploded view of a battery cell according to some embodiments of this application;
FIG. 5 is a cross-sectional view of an electrode assembly according to some embodiments of this application;
FIG. 6 is a schematic diagram of a first electrode plate and separator unfolded according to some embodiments of this application;
FIG. 7 is a cross-sectional view along A-A of FIG. 6;
FIG. 8 is a cross-sectional view along B-B of FIG. 6;
FIG. 9 is a schematic diagram of a first electrode plate stacked according to some embodiments of this application;
FIG. 10 is an enlarged view of part I in FIG. 5;
FIG. 11 is a cross-sectional view of an electrode assembly according to some other embodiments of this application;
FIG. 12 is a schematic diagram of a first electrode plate and separator unfolded according to some other embodiments of this application;
FIG. 13 is a cross-sectional view along C-C of FIG. 12;
FIG. 14 is a schematic diagram of a first electrode plate and separator unfolded according to still some other embodiments of this application;
FIG. 15 is a schematic structural diagram of connection of a first electrode plate, a second electrode plate, and separators in the embodiment shown in FIG. 5; and
FIG. 16 is a flowchart of a manufacturing method of electrode assembly according to an embodiment of this application.

### Reference signs:

1. vehicle; 2. battery; 3. controller; 4. motor; 5. box;
51. first box portion; 52. second box portion; 53. accommodating space;
20. battery cell; 200. battery module;
21. end cover assembly, 211. electrode terminal, 212. end cover;
22. electrode assembly;
   221. tab,
   222. first electrode plate,
      2221. bending segment,
         22211. thinned portion,
         22212. cutoff portion,
      2222. first stacking segment,
      2223. first tab,
   223. separator,
      2231. first edge portion,
         22311. first hot-melted segment,
      2232. second edge portion,
         22321. second hot-melted segment,
         22322. third hot-melted segment,
   224. second electrode plate,
      2241. second stacking segment;
23. housing, and 231. opening.

The accompanying drawings herein are incorporated into this specification and form a part of this specification. They illustrate embodiments conforming to this application and are intended to explain the principles of this application together with this specification.

### DESCRIPTION OF EMBODIMENTS

To help better understand the technical solutions of this application, the following describes the embodiments of this application in detail with reference to the accompanying drawings.

Apparently, the described embodiments are merely some but not all of the embodiments of this application. All other embodiments obtained by persons of ordinary skill in the art based on the embodiments of this application without creative efforts shall fall within the protection scope of this application. The scope of the invention is defined by the appended claims.

The terms used in the embodiments of this application are merely intended to describe specific embodiments, but not intended to limit this application. The terms "a/an", "the", and "this" of singular forms used in the embodiments and the appended claims of this application are also intended to include plural forms, unless otherwise specified in the context clearly.

It should be understood that the term "and/or" used in this specification is only an associative relationship for describing associated objects, indicating the presence of three possible relationships. For example, A and/or B may indicate three cases: presence of only A; presence of both A and B; and presence of only B. In addition, the character "/" in this specification generally indicates an "or" relationship between contextually associated objects.

It should be noted that the orientation terms such as "above", "under", "left", and "right" described in the embodiments of this application refer to orientations as seen from the angles shown in the accompanying drawings, and should not be understood as limitations on the embodiments of this application. In addition, in the context, it should be further understood that when an element is described as being "above" or "under" another element, that element may not only be directly connected "above" or "under" the another element, but also be indirectly connected "above" or "under" the another element through an intermediate element.

In this application, "multiple" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a cathode plate, an anode plate, and separators. The battery cell mainly relies on migration of metal ions between the cathode plate and the anode plate to work. The cathode plate includes a cathode current collector and a cathode active substance layer. A surface of the cathode current collector is coated with the cathode active substance layer. A cathode current collector not coated with the cathode active substance layer protrudes from a cathode current collector already coated with the cathode active substance layer, and the cathode current collector not coated with the cathode active substance layer serves as a cathode tab. A surface of the anode current collector is coated with the anode active substance layer. An anode current collector not coated with the anode active substance layer protrudes from an anode current collector already coated with the anode active substance layer, and the anode current collector not coated with the anode active substance layer serves as an anode tab. To allow a high current to pass through without any fusing, multiple cathode tabs are provided and stacked together, and multiple anode tabs are provided and stacked together.

The electrode assembly may be a wound structure or a stacked structure. A wound electrode assembly is formed by winding a cathode plate, an anode plate, and a separator between the cathode plate and the anode plate together. A stacked electrode assembly includes a structure formed by alternately stacking multiple cathode plates, multiple anode plates, and separators, or may be an electrode assembly formed by wrapping separators around upper and lower sides of one continuous integral anode plate and zigzag stacking the anode plate and a cathode plate. In such a structure having the separators completely wrap the anode plate to form a separator pouch electrode, the electrode plate is completely housed in a separator pouch so that the electrode plate is neither displaced nor comes into contact with another electrode plate, thereby effectively preventing a short circuit and guaranteeing the safety of batteries and full extraction of battery capacity. However, the inventors have found that the pouch separator requires hot melt pressing of separator edges corresponding to each layer of electrode plate to perform packaging, leading to low efficiency; and that repeated hot melting of separator edges may cause excessive shrinkage and even breakage of separators.

In addition, for wrapping the anode plate with the separators and then performing zigzag stacking, the separators exceeding ends of the anode plate may turn over, and especially, the separators exceeding the ends are more likely to turn over at bending positions of zigzag stacking, making the cathode and anode plates come into contact with each other and thus at the risk of a short circuit in the electrode assembly.

In view of this, the embodiments of this application provide a technical solution so as to hot-melt connect at least part of the separators exceeding ends of an anode plate, thereby effectively preventing separators exceeding the ends from turning over, preventing short circuits in electrode assemblies, enhancing the electrochemical performance of batteries, improving the safety and reliability of batteries, avoiding repeated and excessive heating of separators, and improving the production efficiency. The following is a detailed description of the embodiment of this application.

The technical solution described in the embodiments of this application is applicable to various batteries and electric apparatuses.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the apparatus using a battery being a vehicle is used as an example for description of the following embodiments.

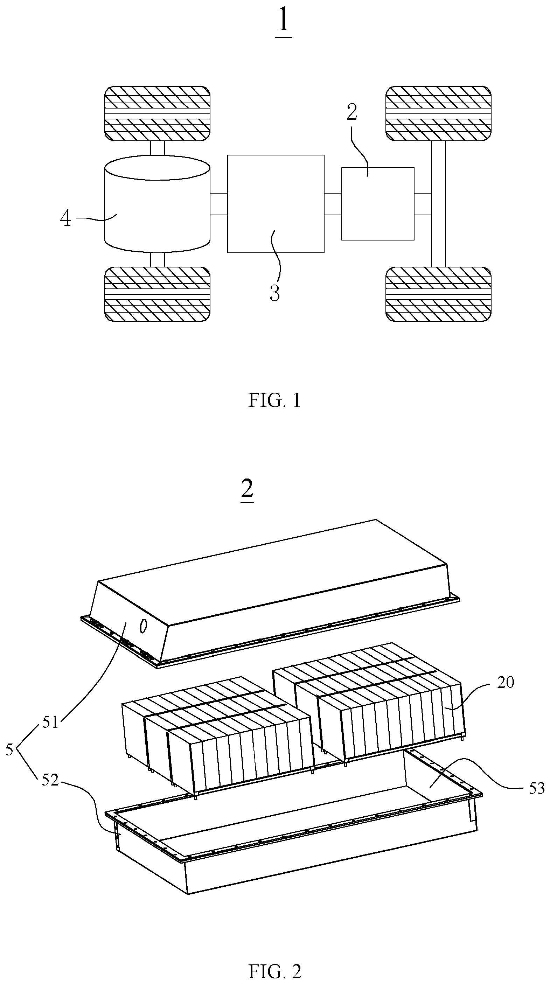

FIG. 1 is a schematic structural diagram of a vehicle 1 according to some embodiments of this application.

As shown in FIG. 1, a battery 2 is provided inside the vehicle 1, the battery 2 refers to a single physical module that includes one or more battery cells to provide higher voltage and capacity. For example, the battery 2 mentioned in this application may include a battery module or a battery pack. The battery 2 may be provided at the bottom, head, or tail of the vehicle 1. The battery 2 may be configured to supply power to the vehicle 1. For example, the battery 2 may be used as an operational power source for the vehicle 1. The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 may be used as not only the operational power source for the vehicle 1 but also a driving power source for the vehicle 1, replacing or partially replacing fossil fuel or natural gas to provide driving traction for the vehicle 1.

FIG. 2 is a schematic exploded view of a battery 2 according to some embodiments of this application.

As shown in FIG. 2, the battery 2 includes a box 5 and battery cells 20, and the battery cells 20 are accommodated in the box 5.

The box 5 is configured to accommodate the battery cells 20, and the box 5 may have various structures. In some embodiments, the box 5 may include a first box portion 51 and a second box portion 52. The first box portion 51 and the second box portion 52 fit together and jointly define an accommodating space 53 for accommodating the battery cells 20. The second box portion 52 may be a hollow structure with one end open, the first box portion 51 may be a plate-shaped structure, and the first box portion 51 covers the opening side of the second box portion 52 so as to form the box 5 having the accommodating space 53. Alternatively, the first box body portion 51 and the second box portion 52 may both be a hollow structure with one side open, and the opening side of the first box portion 51 is engaged with the opening side of the second box portion 52 so as to form the box 5 having the accommodating space 53. Certainly, the first box portion 51 and the second box portion 52 may be in various shapes, such as cylinder and cuboid.

In order to improve the airtightness after the connection of the first box portion 51 and the second box portion 52, a sealing element such as sealing gum or sealing ring may also be disposed between the first box portion 51 and the second box portion 52.

Assuming that the first box portion 51 fits on a top of the second box portion 52, the first box portion 51 may also be referred to as an upper box cover, and the second box portion 52 may also be referred to as a lower box body.

The battery 2 may include multiple battery cells 20. The multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and a whole constituted by the multiple battery cells 20 is accommodated in the box 5. Certainly, multiple battery cells 20 may first be connected in series, parallel, or series-parallel to constitute a battery pack, and then multiple battery packs are connected in series, parallel, or series-parallel to constitute a whole which is accommodated in the box 5.

Based on different power demands, battery cells 20 can be set in any quantity. The multiple battery cells 20 may be connected in series, in parallel, or in series and parallel to achieve greater capacity or power. Alternatively, multiple battery cells 20 may be connected in series, parallel, or series-parallel to form a battery module first, and then multiple battery modules are connected in series, parallel, or series-parallel to form the battery 2. In other words, the multiple the battery cells 20 may be directly combined into the battery 2, or may first be combined into battery modules which are then combined into the battery 2 and accommodated in the box 5.

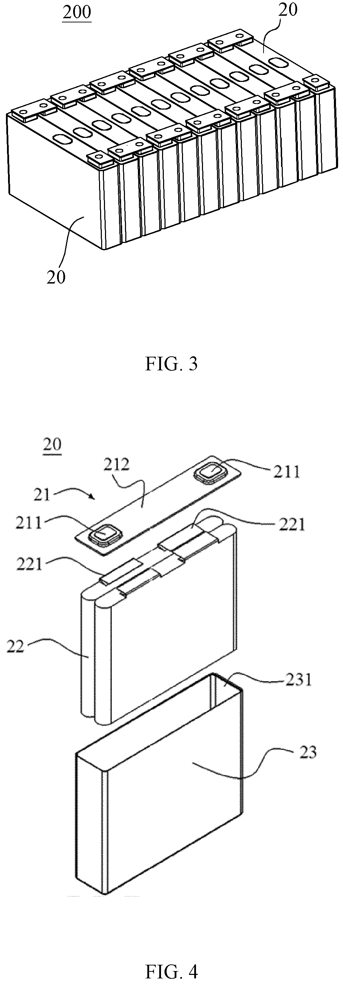

FIG. 3 is a schematic structural diagram of a battery module 200 according to an embodiment of this application.

As shown in FIG. 3, because each battery 2 may include a large number of battery cells 20, for ease of installation, the battery cells 20 may be arranged by group, and each group of battery cells 20 form a battery module 200. The battery 2 may include multiple battery modules 200. These battery modules 200 may be connected in series, parallel, or series-parallel.

FIG. 4 is a schematic exploded view of a battery cell 20 according to some embodiments of this application.

Refer to FIG. 4. The battery cell 20 is a smallest unit for forming the battery 2. In some embodiments of this application, the battery cell 20 may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell 20 may be flat, rectangular, or of other shapes, and this is not limited in the embodiments of this application either. For ease of illustration, a rectangular battery cell 20 is used as an example in all the following embodiments.

Still refer to FIG. 4. The battery cell 20 includes an end cover assembly 21, an electrode assembly 22, and a housing 23. The housing 23 is configured to accommodate the electrode assembly 22. The housing 23 may have various shapes and sizes. Specifically, the shape of the housing 23 may be determined according to the specific shape and size of one or more electrode assemblies 22. In some embodiments, the housing 23 is a hollow cuboid. In some other embodiments, the housing 23 may be cylindrical or in other shapes. One end of the housing 23 is an opening 231. The end cover assembly 21 covers the opening 231 and is joined with the housing 23 to form an enclosed chamber for accommodating the electrode assembly 22. The chamber may be filled with electrolyte. In some embodiments, the end cover assembly 21 includes an end cover 212. The end cover 212 is provided with an electrode terminal 211, and the electrode assembly 22 is provided with a tab 221. The electrode terminal 211 may be configured to be electrically connected with the tab 221 to output electric energy of the battery cell 20. For each electrode terminal 211, a corresponding current collecting component may be provided. The current collecting component may be disposed between the end cover 212 and the tab 221 to electrically connect the electrode terminal 211 and the tab 221. The end cover assembly 21 may be further provided with other functional components, for example, a pressure relief mechanism for relieving internal pressure when pressure or temperature inside the battery cell 20 reaches a threshold. The housing 23 and the end cover 212 may be made of various materials, for example, copper, iron, aluminum, stainless steel, or aluminum alloy.

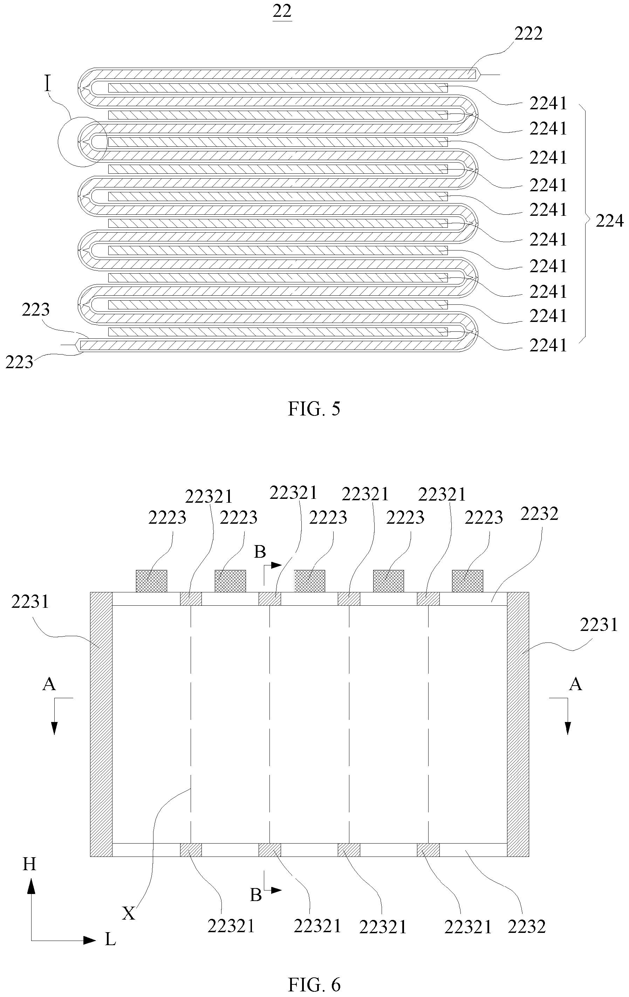

FIG. 5 is a cross-sectional view of an electrode assembly 22 according to some embodiments of this application.

As shown in FIG. 5, the electrode assembly 22 in some embodiments of this application includes a first electrode plate 222, separators 223, and a second electrode plate 224. The first electrode plate 222 and the separator 223 each are a continuous integral structure. In some other embodiments, the first electrode plate 222 may also be multiple split electrode plates, and the continuous separators 223 are provided on two sides of the multiple electrode plates in a thickness direction of the electrode plates.

The separators 223 on two sides are provided on the two sides of the first electrode plate 222 in the thickness direction of the electrode plate. The first electrode plate 222 and the separators 223 on two sides are folded over and over again so that the first electrode plate 222 and the separators 223 on two sides are bent over and over again roughly in a zigzag pattern. The second electrode plate 224 is provided between adjacent two sides of the first electrode plate 222 of the stacked structure. The first electrode plate 222 is separated from the second electrode plate 224 by the separators 223 so as to form the electrode assembly 22 of the stacked structure. The first electrode plate 222 and the second electrode plate 224 have opposite polarities, and when one of them is a cathode plate, the other is an anode plate. The separator 223 is a microporous film for separating the first electrode plate 222 and the second electrode plate 224 and is a polymeric functional material with nanoscale micropores. The separator 223 is configured to prevent a short circuit caused by the two electrode plates coming into contact with each other and allow electrolyte ions to pass through. The separator 223 may be a polyolefin microporous film made of polyolefin material that includes polyethylene (PE) monofilm, polypropylene (PP) monofilm, and microporous multifilm made of polyethylene and polypropylene.

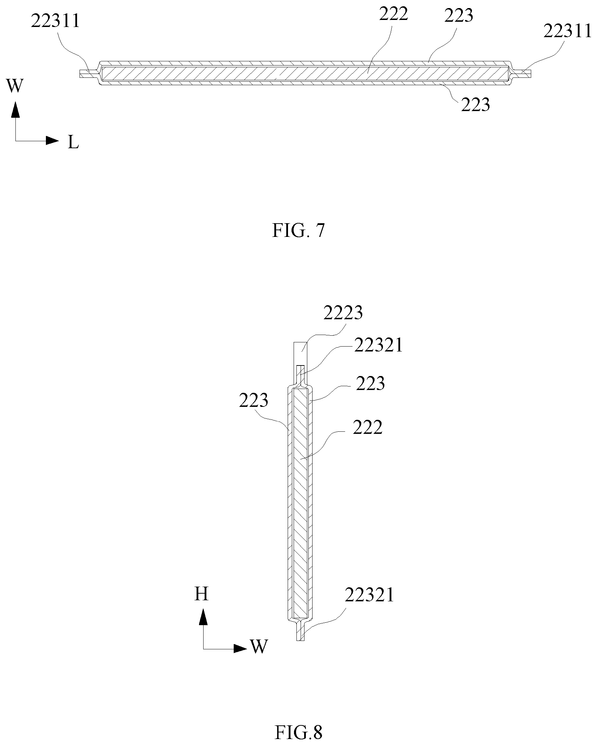

FIG. 6 is a schematic diagram of the first electrode plate 222 and separator 223 unfolded according to some embodiments of this application. FIG. 7 is a cross-sectional view along A-A of FIG. 6. FIG. 8 is a cross-sectional view along B-B of FIG. 6.

As shown in FIGs. 6 to 8, the electrode assembly 22 in the embodiments of this application includes the first electrode plate 222 and the separators 223. The separators 223 are provided on two sides of the first electrode plate 222 in the thickness direction W of the electrode plate and stacked with the first electrode plate 222. In the unfolded state of the electrode assembly 22, the separator 223 has first edge portions 2231 each exceeding an end of the first electrode plate 222 in a length direction L of the separator, and the separator 223 has second edge portions 2232 each exceeding an end of the first electrode plate 222 in a height direction H of the separator. In the thickness direction W of the electrode plate, the corresponding first edge portions 2231 on two sides of the first electrode plate 222 are at least partly hot-melt connected to form first hot-melted segments 22311, and the corresponding second edge portions 2232 on two sides of the first electrode plate 222 are at least partly hot-melt connected to form second hot-melted segments 22321.

In the embodiments shown in FIGs. 6 to 8, the continuous integral separators 223 are provided on the two sides of the first electrode plate 222 in the thickness direction W of the electrode plate. The separators 223 are provided in pairs, and the first electrode plate 222 is provided between the two separators 223. During manufacturing of the battery assembly 22, the two separators 223 are separately attached to the first electrode plate 222 so that the position of the separator 223 is fixed with respect to the first electrode plate 222. An overall size of the separator 223 is larger than an overall size of the first electrode plate 222. In this way, the separator 223 exceeds two side ends of the first electrode plate 222 in the length direction L of the separator so as to form the first edge portions 2231, and the separator 223 exceeds two side ends of the first electrode plate 222 in the height direction H of the separator so as to form the second edge portions 2232. The overall size of the separator 223 being larger than the overall size of the first electrode plate 222 enables the first electrode plate 222 to be entirely enclosed by the separators 223 on two sides, thereby fully separating the first electrode plate 222 from the second electrode plate 224 after the electrode assembly 22 is formed, so as to implement insulation between the two plates.

After the separators 223 are provided on the two sides of the first electrode plate 222 in the thickness direction W of the electrode plate, the separators 223 and the first electrode plate 222 may be folded over and over again in a way that the first electrode plate 222 and the separators 223 on two sides are bent roughly in a zigzag pattern to form the electrode assembly 22. In the unfolded state of the first electrode plate 222, multiple spaced first tabs 2223 are provided at one side end of the first electrode plate 222 in the height direction H of the separator. After the first electrode plate 222 is zigzag stacked, the multiple first tabs 2223 overlap to form a tab 221 of a multi-tab structure for electrical connection with an electrode terminal 211.

Multiple dashed lines X in FIG. 6 do not indicate entities but only illustratively mark bending positions at which the first electrode plate 222 and the separators 223 are zigzag stacked, and these bending positions are bending regions having a specific width.

After the stacking, since the overall size of the separator 223 is larger than the overall size of the first electrode plate 222, the first edge portion 2231 and the second edge portion 2232 exceeding the first electrode plate 222 are likely to turn over or crease. The turnover of the first edge portion 2231 and the second edge portion 2232 may cause the first electrode plate 222 to be exposed and come into contact with the second electrode plate 224, causing a short circuit.

To avoid turnover of the first edge portion 2231 and the second edge portion 2232, after the two separators 223 are attached to the two sides of the first electrode plate 222 in the thickness direction W of the electrode plate, the corresponding first edge portions 2231 of the two separators 223 may be at least partly hot-melt connected, and the corresponding second edge portions 2232 of the two separators 223 may be at least partly hot-melt connected to increase the strength of the separators 223 and thus prevent the separators 223 from turning over.

As shown in FIGs. 6 and 7, in the length direction L of the separator, the separator 223 has the first edge portions 2231 exceeding the left and right side ends of the first electrode plate 222. The corresponding first edge portions 2231 on two sides of the first electrode plate 222 in the thickness direction W of the electrode plate are hot-melt connected to form the first hot-melted segments 22311 so that the separators 223 form at least partially closed structures at two side ends of the first electrode plate 222 in the length direction L of the separator, thereby effectively preventing the first edge portions 2231 in this region from turning over.

As shown in FIGs. 6 and 8, in the height direction H of the separator, the separator 223 has the second edge portions 2232 exceeding the upper and lower side ends of the first electrode plate 222. The corresponding second edge portions 2232 on the two sides of the first electrode plate 222 in the thickness direction W of the electrode plate are hot-melt connected to form the second hot-melted segments 22321 so that the separators 223 form at least partially closed structures at two side ends of the first electrode plate 222 in the height direction H of the separator, thereby effectively preventing the second edge portions 2232 in this region from turning over.

The first edge portions 2231 and second edge portions 2232 exceeding the first electrode plate 222 are at least partly hot-melt connected separately to enclose or semi-enclose the first electrode plate 222 in the separators 223, and the first electrode plate 222 and the separators 223 are zigzag stacked, thereby preventing the separator 223 from turning over while such turnover makes the first electrode plate 222 and the second electrode plate 224 come into contact, and reducing the risk of a short circuit in the electrode assembly 22. Moreover, the separators 223 on two sides of the first electrode plate 222 have gone through hot-melt connection before being stacked into the electrode assembly 22. Therefore, no more hot-melting needs to be performed on the exceeding parts of the separators 223 after stacking, thereby improving the production efficiency and preventing the separator 223 from shrinkage or damage caused by over hot-melting.

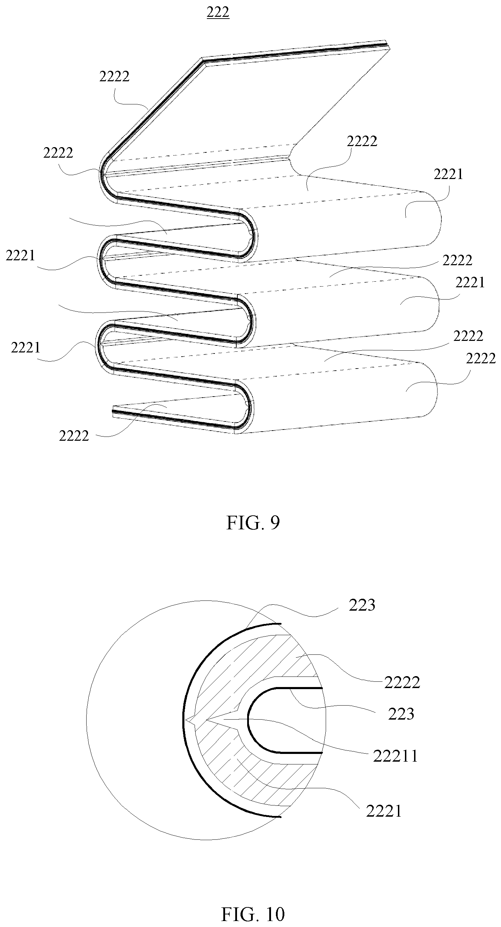

FIG. 9 is a schematic diagram of a first electrode plate 222 stacked according to some embodiments of this application.

As shown in FIG. 9, in some embodiments, the first electrode plate 222 includes multiple bending segments 2221 and multiple stacked first stacking segments 2222, each bending segment 2221 connecting two adjacent first stacking segments 2222. After unfolded, the multiple bending segments 2221 in FIG. 9 correspond to regions at positions indicated by multiple dashed lines X in FIG. 6. FIG. 6 and FIG. 9 only exemplarily illustrate a structure of the first electrode plate 222, and the specific number of the bending segments 2221 and first stacking segments 2222 may be set depending on dimensions of the electrode assembly, and this application does not make any specific limitation in this regard.

The first electrode plate 222 in FIG. 9 is a continuous integral structure. During manufacturing of the electrode assembly, one continuous integral separator 223 is attached to both sides of the first electrode plate 222 in the thickness direction W of the electrode plate. When zigzag stacking is to be performed on the first electrode plate 222, the first electrode plate 222 and the separators 223 on two sides are bent at the regions at positions indicated by the dashed lines X so that the bending segments 2221 of the first electrode plate 222 are formed.

The bending segment 2221 is an arc-shaped region. Therefore, when the separators 223 on two sides of the first electrode plate 222 are bent together with the bending segments 2221, it is likely that the second edge portions 2232 in the regions of the bending segments 2221 crease or turn over, affecting the performance of the electrode assembly 22 and bringing a short circuit risk.

Still refer to FIG. 6. To avoid creasing or turning over of the second edge portions 2232 of the separators 223 corresponding to the regions of the bending segments 2221, in the unfolded state of the electrode assembly 22, the second hot-melted segments 22321 are spaced at positions corresponding to the bending segments 2221 in the length direction L of the separator. That is, second edge portions 2232 corresponding to the position of each bending segment 2221 (that is, the region of the dashed line X in FIG. 6) are hot-melt connected to form the second hot-melted segment 22321.

During manufacturing of the electrode assembly, one continuous integral separator 223 is first attached to both sides of the first electrode plate 222 in the thickness direction W of the electrode plate, and then the second edge portions 2232 corresponding to the regions of the dashed lines X are hot-melt connected to form the second hot-melted segments 22321. After the hot-melt connection is completed, the first electrode plate 222 and the separators 223 on two sides are bent together over and over again at the regions of the dashed lines X to form the multiple bending segments 2221. Because before stacking, the second edge portions 2232 corresponding to the regions of the dashed lines X are hot-melt connected to form the second hot-melted segments 22321, the second edge portions 2232 corresponding to the bending segments 2221 do not crease or turn over due to repeated bending operations during the stacking operation, thereby reducing the risk of a short circuit in the electrode assembly 22.

In some embodiments, in the length direction L of the separator, length of the second hot-melted segment 22321 is larger than length of the bending segment 2221. To be specific, after the second edge portions 2232 corresponding to the bending segments 2221 are hot-melt connected, the bending segments 2221 are entirely enclosed in the second hot-melted segments 22321 without exposing any part. Therefore, during the stacking operation, none of the second edge portions 2232 corresponding to the bending segments 2221 in the length direction L of the separator has a risk of turnover while such turnover exposes the bending segment 2221.

In some embodiments, in the height direction H of the separator, the second hot-melted segments 22321 at two side ends of the first electrode plate 222 are symmetric with respect to the bending segments 2221. To be specific, the second edge portions 2232 at two side ends of the bending segment 2221 in the height direction H of the separator are separately hot-melt connected to form the second hot-melted segments 22321, and the second hot-melted segments 22321 at two side ends of the first electrode plate 222 are symmetric with respect to the bending segments 2221. This can make each of the two side ends of the bending segment 2221 in the height direction H of the separator be entirely enclosed in the separators 223 via the second hot-melted segment 22321, and therefore none of the second edge portions 2232 corresponding to the bending segments 2221 on two sides in the height direction H of the separator has a risk of turnover while such turnover exposes the bending segment 2221.

FIG. 10 is an enlarged view of part I in FIG. 5.

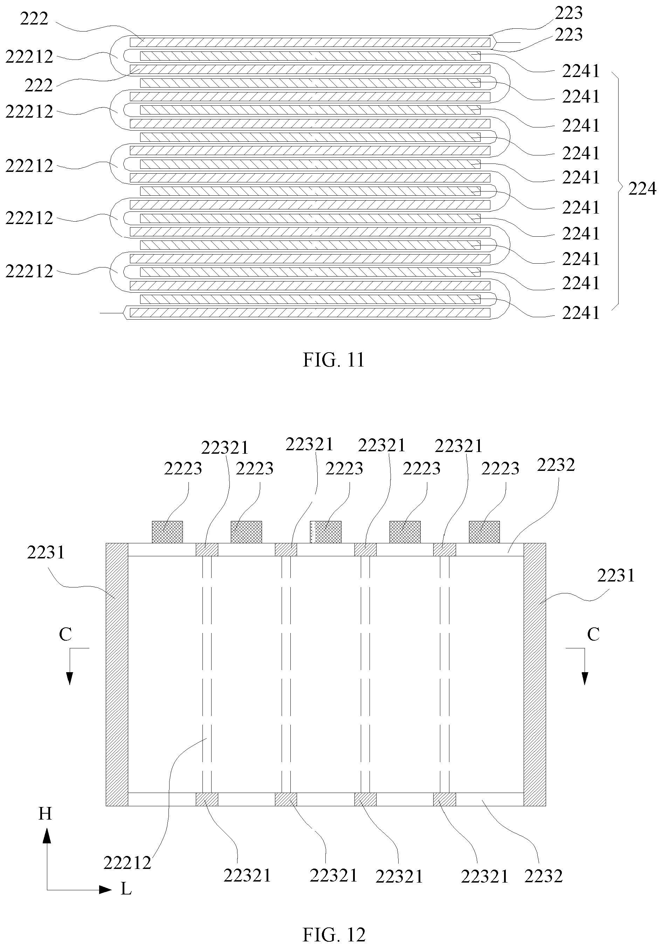

As shown in FIG. 5 and FIG. 10, in some embodiments, in the thickness direction W of the electrode plate, the bending segment 2221 includes a thinned portion 22211 or a cutoff portion 22212 (see FIG. 11) to facilitate bending of the first electrode plate 222.

In the embodiment shown in FIG. 10, the bending segment 2221 includes a thinned portion 22211. The thinned portions 22211 may be the same as the bending segments 2221 in quantity. Certainly, it can be understood that some of all bending segments 2221 are provided with a thinned portion 22211, while the remaining bending segments 2221 may not be provided with a thinned portion 22211.

The thinned portion 22211 may be a groove provided in the first electrode plate 222, and the groove may be formed by removing part of an active substance layer on the first electrode plate 222. In an example, the thinned portion 22211 has a V-shaped cross section in a direction perpendicular to the thickness direction W of the electrode plate, but the cross section of the thinned portion 22211 is not limited to the V shape and may also be U-shaped, rectangular, or the like.

One of two adjacent thinned portions 22211 is located on a surface of the first electrode plate 222 in the thickness direction W of the electrode plate, and the other is located on a surface opposite to the foregoing surface, so that the first electrode plate 222 can be zigzag bent over and over again.

During manufacturing of the electrode assembly 22, the thinned portion 22211 is configured to guide the first electrode plate 222 to bend at the region of the thinned portion 22211 to facilitate the stacking operation. The thinned portion 22211 has a smaller thickness than the first electrode plate 222, and therefore the first electrode plate 222 is more likely to bend at the thinned portion 22211, thereby helping to improve the controllability and accuracy of bending positions.

Still refer to FIG. 6. In some embodiments, when the bending segment 2221 includes the thinned portion 22211, the second hot-melted segment 22321 should be set to such a length in the length direction L of the separator that at least second edge portions 2232 corresponding to ends of the thinned portion 22211 can be hot-melt connected. In a specific embodiment, the length of the second hot-melted segment 22321 in the length direction L of the separator is 3-50 mm, implementing the enclosure of the thinned portion 22211 and reducing the risk of turnover of the second edge portions 2232.

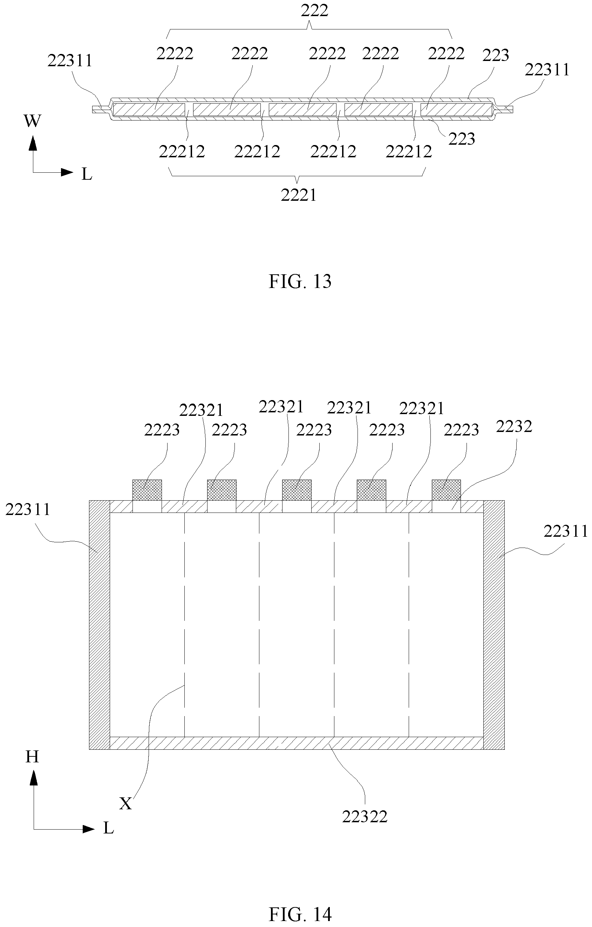

FIG. 11 is a cross-sectional view of the electrode assembly 22 according to some other embodiments of this application. FIG. 12 is a schematic diagram of the first electrode plate 222 and separator 223 unfolded according to some other embodiments of this application. FIG. 13 is a cross-sectional view along C-C of FIG. 12.

As shown in FIGs. 11 to 13, in some embodiments, the bending portion 2221 of the first electrode plate 222 includes a cutoff portion 22212. In the unfolded state of the first electrode plate 222, the cutoff portions 22212 divide the first electrode plate 222 into the multiple spaced first stacking segments 2222. During manufacturing of the electrode assembly 22, the multiple first stacking segments 2222 are spaced apart and attached to one integral separator 223, and a distance for spacing the multiple first stacking segments 2222 is equal to the width of one cutoff portion 22212. Then, one integral separator 223 is attached to one side of the multiple first stacking segments 2222 unattached with separator 223 so as to provide the multiple first stacking segments 2222 between the two separators 223. Then, the separators 223 and the multiple first stacking segments 2222 are folded over and over again at the positions of the multiple cutoff portions 22212 so that the separators 223 and the multiple first stacking segments 2222 are stacked together.

During manufacturing of the electrode assembly 22, the cutoff portions 22212 are configured to guide the separators 223 and the multiple first stacking segments 2222 to fold at the positions of the cutoff portions 22212, so as to facilitate the stacking operation. In addition, because the cutoff portions 22212 divide the first electrode plate 222 into the multiple spaced first stacking segments 2222, the dimensional precision of the first stacking segments 2222 can be precisely controlled. This facilitates the controllability and accuracy of folding positions.

Still refer to FIG. 12. In some embodiments, when the bending segment 2221 includes the cutoff portion 22212, length of the second hot-melted segment 22321 in the length direction L of the separator may be larger than width of the cutoff portion 22212. Specifically, the length of the second hot-melted segment 22321 in the length direction L of the separator is 5-50 mm so that two side ends of the cutoff portion 22212 in the length direction L of the separator can be entirely or partially enclosed, and the risk of turnover of the second edge portion 2232 corresponding to the cutoff portion 22212 can be reduced.

Still refer to FIGs. 5 and 12. In some embodiments, in the height direction H of the separator, one side end of the first electrode plate 222 has first tabs 2223 extending through the separator 223, and the second hot-melted segments 22321 avoid the first tabs 2223.

In the unfolded state of the first electrode plate 222, the multiple spaced first tabs 2223 are spaced at the end on one side of the first electrode plate 222 in the height direction H of the separator. After the first electrode plate 222 is zigzag stacked, the multiple first tabs 2223 overlap to form a tab 221 of a multi-tab structure for electrical connection with an electrode terminal 211. Because the first tabs 2223 extend through the separator 223, it is necessary to avoid the positions of the first tabs 2223 when the second edge portions 2232 are hot-melt connected to form the second hot-melted segments 22321, so that the second edge portions 2232 on two sides of the first electrode plate 222 in the thickness direction W of the electrode plate can be hot-melt connected.

FIG. 14 is a schematic diagram of the first electrode plate 222 and separator 223 unfolded according to still some other embodiments of this application.

As shown in FIG. 14, in some embodiments, regions, avoiding the first tabs 2223, of the second edge portions 2232 on two sides of the first electrode plate 222 in the thickness direction W of the electrode plate are all hot-melt connected to form the second hot-melted segments 22321.

The regions avoiding the first tabs 2223 and of the second edge portions 2232 are all hot-melt connected to form the second hot-melted segments 22321, and parts of the second edge portions 2232 in contact with the first tabs 2223 make the second edge portions 2232 adhere to the first tabs 2223 because the separator 223 itself is adhesive, and thus one side end of the first electrode plate 222 having the first tabs 2223 in the height direction H of the separator is entirely enclosed in the separators 223 on two sides in the thickness direction W of the electrode plate, thereby reducing the risk of a short circuit in the electrode assembly 22 caused by turnover of the second edge portions 2232 on this side.

Likewise, in the height direction H of the separator, the second edge portions 2232 on a side opposite to the side provided with the first tabs 2223 may be entirely hot-melt connected to form a third hot-melted segment 22322 because there is no interference from the first tabs 2223, so that two side ends of the first electrode plate 222 in the height direction H of the separator can be entirely enclosed, thereby sufficiently reducing the risk of a short circuit in the electrode assembly 22 caused by turnover of the entire second edge portions 2232.

Still refer to FIG. 14. In some embodiments, the corresponding first edge portions 2231 on two sides of the first electrode plate 222 in the thickness direction W of the electrode plate are entirely hot-melt connected to form the first hot-melted segments 22311. This can sufficiently reduce the risk of a short circuit in the electrode assembly 22 caused by turnover of the entire first edge portions 2231.

The first edge portions 2231 exceeding the first electrode plate 222 and the second edge portions 2232 excluding the parts overlapping the first tabs 2223 of the separator 223 are entirely hot-melt connected so that the first electrode plate 222 can be entirely enclosed in the separators 223 on two sides in the thickness direction W of the electrode plate. This can effectively avoid turnover of the first edge portions 2231 and the second edge portions 2232, prevent short circuits in the electrode assembly 22, stabilize the structure of the first electrode plate 222 and the separator 223, and improve the production efficiency.

It can be understood that in FIG. 14, the first electrode plate 222 may be a continuous integral first electrode plate 222 including the thinned portions 22211 or a first electrode plate 222 that is divided into the multiple first stacking segments 2222 by cutoff portions 22212.

In some embodiments, length of the first hot-melted segment 22311 in the length direction L of the separator is 1-5 mm, and height of the second hot-melted segment 22321 in the height direction H of the separator is 1-5 mm.

The first hot-melted segments 22311 are provided at two side ends of the first electrode plate 222 in the length direction L of the separator. A length for hot melting of the first hot-melted segment 22311 in the length direction L of the separator is 1-5 mm, guaranteeing the strength of the first hot-melted segments 22311 and reducing the risk of cracking of the first hot-melted segment 22311 in the stacking operation. The second hot-melted segments 22321 are provided at two side ends of the first electrode plate 222 in the height direction H of the separator. A length for hot melting of the second hot-melted segment 22321 in the height direction H of the separator is 1-5 mm, guaranteeing the strength of the second hot-melted segments 22321 and reducing the risk of cracking of the second hot-melted segment 22321 in the stacking operation.

In some embodiments, the first electrode plate 222 is an anode plate. A current collector of the anode plate is made of a metal material such as copper or copper alloy. The current collector of the anode plate is coated with an anode active substance layer, and an anode active substance may be a material such as carbon or silicon. Due to characteristics of the anode active substance material, powder falling is likely to occur during the operation of the electrode assembly 22. Having the anode plate enclosed within the separators 223 as the first electrode plate 222 can reduce the risk of corrosion to a housing 23 caused by powder falling of the anode active substance material.

Still refer to FIG. 5 and FIG. 11. In some embodiments, the electrode assembly 22 further includes a second electrode plate 224 opposite to the first electrode plate 222 in polarity. When the first electrode plate 222 is an anode plate, the second electrode plate 224 is a cathode plate. The second electrode plate 224 includes multiple second stacking segments 2241. In a stacked state of the electrode assembly 22, each second stacking segment 2241 is provided between two adjacent first stacking segments 2222.

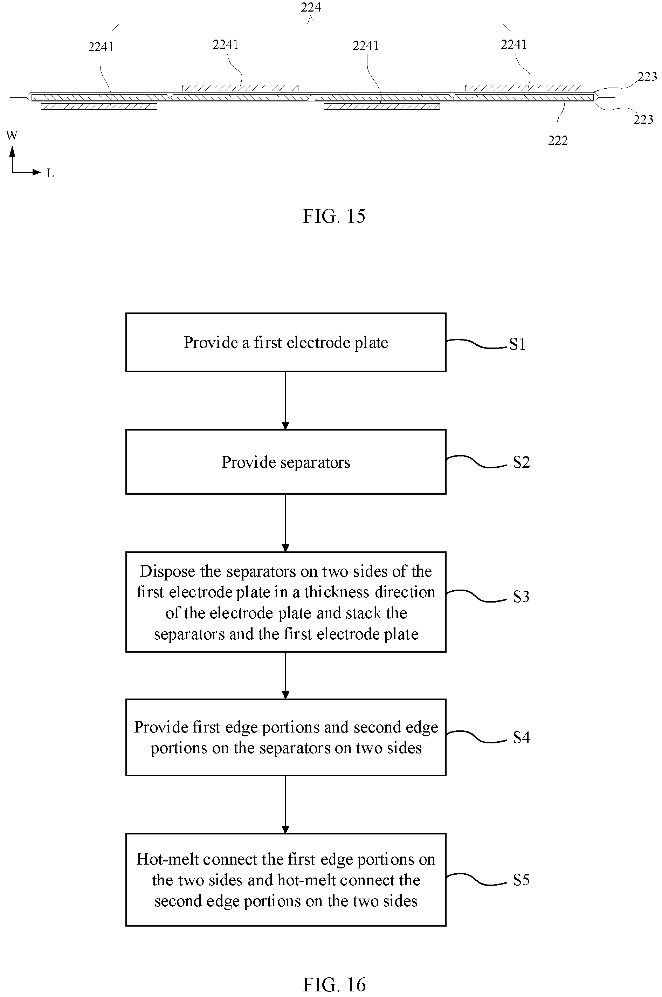

FIG. 15 is a schematic structural diagram of connection of the first electrode plate 222, the second electrode plate 224, and the separators 223 in the embodiment of FIG. 5.

As shown in FIG. 15, during manufacturing of an electrode assembly 22, on the basis of the first electrode plate 222, the separators 223 are provided on two sides of the first electrode plate 222 in the thickness direction W of the electrode plate so that the separators 223 provided in pairs jointly clamp the first electrode plate 222. In an example, after the separators 223 are provided on the first electrode plate 222, the second stacking segments 2241 of the second electrode plate 224 are attached to the separators 223. For example, the second stacking segments 2241 may be connected to the separators 223 through hot pressing, electrophoresis, or binding. One of two adjacent second stacking segments 2241 is attached to one of the separators 223 provided in pairs, and the other is attached to the other of the separators 223 provided in pairs, so that the two adjacent second stacking segments 2241 are provided on two opposite sides of the first electrode plate 222, respectively. Along the thickness direction W of the electrode plate, the first stacking segments 2222 and the second stacking segments 2241 are provided corresponding to each other in position. The first electrode plate 222, the second electrode plate 224, and the separators 223 are bent over and over again to form the electrode assembly 22 stacked. The foregoing arrangement enables the electrode assembly 22 formed to better meet use requirements and optimizes the electrical performance of the electrode assembly 22.

FIG. 16 is a flowchart of a manufacturing method of electrode assembly according to an embodiment of this application.

As in FIG. 16, an embodiment of this application further provides a manufacturing method of electrode assembly. The method includes the following steps.

Step S1. Provide a first electrode plate 222. In some embodiments, the first electrode plate 222 may be an anode plate.

Step S2. Provide separators 223. The separator 223 may be a continuous integral structure.

Step S3. Dispose the separators 223 on two sides of the first electrode plate 222 in a thickness direction W of the electrode plate and stack the separators 223 and the first electrode plate 222.

Step S4. Provide first edge portions 2231 each exceeding an end of the first electrode plate 222 in a length direction L of the separator on the separator 223, and provide second edge portions 2232 each exceeding an end of the first electrode plate 222 in a height direction H of the separator on the separator 223.

Step S5. In the thickness direction W of the electrode plate, hot-melt connect at least part of the corresponding first edge portions 2231 on two sides of the first electrode plate 222 to form first hot-melted segments 22311, and hot-melt connect at least part of the corresponding second edge portions 2232 on two sides of the first electrode plate 222 to form second hot-melted segments 22321.

In some embodiments, hot pressing is used for hot-melt connection in the manufacturing method of electrode assembly.

In some embodiments, the step S1 of providing a first electrode plate includes: forming multiple thinned portions 22211 on the first electrode plate 222 through indenting or laser cleaning. Indenting or laser cleaning the first electrode plate 222 removes partial material from the first electrode plate 222, and the partial material removed may be an active substance material or a current collector material, so that the thinned portions 22211 have a smaller thickness than other portions of the first electrode plate 222.

In some embodiments, in step S1, one of two adjacent thinned portions 22211 is located on one surface of the first electrode plate 222 in the thickness direction W of the electrode plate, and the other is located on a surface opposite to the foregoing surface, so that the first electrode plate 222 can be zigzag bent over and over again.

In some embodiments, the manufacturing method of electrode assembly further includes the following steps: stacking the separators 223 and the first electrode plate 222 together, bending at the multiple thinned portions 22211 to form multiple bending segments 2221, and forming multiple first stacking segments 2222 stacked between the multiple bending segments 2221.

In some embodiments, the manufacturing method of electrode assembly further includes: providing a second electrode plate 224 and disposing the second electrode plate 224 between stacked adjacent first stacking segments 2222.

In the manufacturing method of electrode assembly of this application, the first edge portions 2231 and second edge portions 2232 exceeding the first electrode plate 222 are at least partly hot-melt connected separately to enclose or semi-enclose the first electrode plate 222 in the separators 223, and the first electrode plate 222 and the separators 223 are zigzag stacked, thereby preventing the separator 223 from turning over while such turnover makes the first electrode plate 222 and the second electrode plate 224 come into contact, and reducing the risk of a short circuit in the electrode assembly 22. Moreover, the separators 223 on two sides of the first electrode plate 222 have gone through hot-melt connection before being stacked into the electrode assembly 22. Therefore, no more hot-melting needs to be performed on the exceeding parts of the separators 223 after stacking, thereby improving the production efficiency and preventing the separator 223 from shrinkage or damage caused by over hot-melting.

The foregoing descriptions are merely preferred embodiments of this application and are not intended to limit this application. Persons skilled in the art understand that this application may have various modifications and variations.

## Claims

1. An electrode assembly (22), **characterized by** comprising:
a first electrode plate (222); and
separators (223) provided on two sides of the first electrode plate (222) in a thickness direction of the electrode plate and stacked with the first electrode plate (222); wherein
in an unfolded state of the electrode assembly (22), the separator (223) has first edge portions (2231) each exceeding an end of the first electrode plate (222) in a length direction of the separator (223), and the separator (223) has second edge portions (2232) each exceeding an end of the first electrode plate (222) in a height direction of the separator (223); and
in the thickness direction of the electrode plate, the corresponding first edge portions (2231) on two sides of the first electrode plate (222) are at least partly hot-melt connected to form first hot-melted segments (22311), and the corresponding second edge portions (2232) on two sides of the first electrode plate (222) are at least partly hot-melt connected to form second hot-melted segments (22321);
wherein the first electrode plate (222) comprises multiple bending segments (2221) and multiple stacked first stacking segments (2222), each bending segment (2221) connecting two adjacent first stacking segments (2222); and **characterized in that**
in the unfolded state of the electrode assembly (22),
the second hot-melted segments (22321) are spaced from each other and located at positions corresponding to the bending segments (2221) in the length direction of the separator (223); and
wherein in the length direction of the separator (223), length of the second hot-melted segment (22321) is larger than length of the bending segment (2221).

2. The electrode assembly (22) according to claim 1, **characterized in that** in the height direction of the separator (223), the second hot-melted segment (22321) is symmetric with respect to the bending segment (2221).

3. The electrode assembly (22) according to any one of claims 1 to 2, **characterized in that** in the thickness direction of the electrode plate, the bending segment (2221) comprises a thinned portion (22211) or a cutoff portion (22212) to facilitate bending of the first electrode plate (222).

4. The electrode assembly (22) according to claim 3, **characterized in that** when the bending segment (2221) comprises a thinned portion (22211), length of the second hot-melted segment (22321) in the length direction of the separator (223) is 3-50 mm.

5. The electrode assembly (22) according to claim 3, **characterized in that** when the bending segment (2221) comprises a cutoff portion (22212), length of the second hot-melted segment (22321) in the length direction of the separator (223) is 5-50 mm.

6. The electrode assembly (22) according to any one of claims 1 to 3, **characterized in that** in the height direction of the separator (223), one side end of the first electrode plate (222) has first tabs (2223) extending through the separator (223), and the second hot-melted segments (22321) avoid the first tabs (2223); and,
wherein preferably, **characterized in that** regions, avoiding the first tabs (2223), of the second edge portions (2232) on two sides of the first electrode plate (222) in the thickness direction of the electrode plate are all hot-melt connected to form the second hot-melted segments (22321).

7. The electrode assembly (22) according to any one of claims 1 to 6, **characterized in that** the corresponding first edge portions (2231) on two sides of the first electrode plate (222) in the thickness direction of the electrode plate are entirely hot-melt connected to form the first hot-melted segments (22311);
and/or
**characterized in that** length of the first hot-melted segment (22311) in the length direction of the separator (223) is 1-5 mm, and height of the second hot-melted segment (22321) in the height direction of the separator (223) is 1-5 mm.

8. The electrode assembly (22) according to any one of claims 1 to 7, **characterized in that** the first electrode plate (222) is an anode plate;
and/or
**characterized by** further comprising a second electrode plate (224) opposite to the first electrode plate (222) in polarity, wherein the second electrode plate (224) comprises multiple second stacking segments (2241), and in a stacked state of the electrode assembly (22), each second stacking segment (2241) is provided between two adjacent first stacking segments (2222).

9. A manufacturing method of electrode assembly, **characterized by** comprising the following steps:
providing (S1) a first electrode plate;
providing (S2) separators;
disposing (S3) the separators on two sides of the first electrode plate in a thickness direction of the electrode plate and stacking the separators and the first electrode plate;
providing (S4) first edge portions each exceeding an end of the first electrode plate in a length direction of the separator on the separator, and providing second edge portions each exceeding an end of the first electrode plate in a height direction of the separator on the separator; and
in the thickness direction of the electrode plate, hot-melt connecting (S5) at least part of the corresponding first edge portions on two sides of the first electrode plate to form first hot-melted segments, and hot-melt connecting at least part of the corresponding second edge portions on two sides of the first electrode plate to form second hot-melted segments;
wherein the first electrode plate comprises multiple bending segments and multiple stacked first stacking segments, each bending segment connecting two adjacent first stacking segments; and in the unfolded state of the electrode assembly, the second hot-melted segments are spaced from each other and located at positions corresponding to the bending segments in the length direction of the separator; and
wherein in the length direction of the separator (223), length of the second hot-melted segment (22321) is larger than length of the bending segment (2221).

10. The manufacturing method according to claim 9, **characterized in that** hot pressing is used for hot-melt connection;
and/or
**characterized in that** the step of providing a first electrode plate comprises:
forming multiple thinned portions on the first electrode plate through indenting or laser cleaning; and wherein preferably,
the method further comprising the following step: stacking the separators and the first electrode plate together, bending at the multiple thinned portions to form multiple bending segments, and forming multiple first stacking segments stacked between the multiple bending segments;
and/or
**characterized by** further comprising: providing a second electrode plate and disposing the second electrode plate between stacked adjacent first stacking segments.

11. A battery cell (20), **characterized by** comprising the electrode assembly (22) according to any one of claims 1 to 8 or comprising an electrode assembly (22) manufactured by using the manufacturing method of electrode assembly (22) according to any one of claims 9 to 10.

12. A battery , **characterized by** comprising multiple battery cells according to claim 11.

13. An electric apparatus, **characterized by** comprising the battery according to claim 12, wherein the battery is configured to supply electric energy.

## Patentansprüche

1. Elektrodenanordnung (22), **gekennzeichnet durch**:
eine erste Elektrodenplatte (222); und
Separatoren (223), die auf beiden Seiten der ersten Elektrodenplatte (222) in Dickenrichtung der Elektrodenplatte bereitgestellt und mit der ersten Elektrodenplatte (222) gestapelt sind; wobei in einem nicht gefalteten Zustand der Elektrodenanordnung (22) der Separator (223) erste Kantenabschnitte (2231) besitzt, wovon jeder von einem Ende der ersten Elektrodenplatte (222) in einer Längsrichtung des Separators (223) vorsteht, und der Separator (223) zweite Kantenabschnitte (2232) besitzt, wovon jeder von einem Ende der ersten Elektrodenplatte (222) in einer Höhenrichtung des Separators (223) vorsteht; und
in der Dickenrichtung der Elektrodenplatte die entsprechenden ersten Kantenabschnitte (2231) auf beiden Seiten der ersten Elektrodenplatte (222) wenigstens teilweise durch Heißschmelzen verbunden sind, um erste heißgeschmolzene Segmente (22311) zu bilden, und die entsprechenden zweiten Kantenabschnitte (2232) auf beiden Seiten der ersten Elektrodenplatte (222) wenigstens teilweise durch Heißschmelzen verbunden sind, um zweite heißgeschmolzene Segmente (22321) zu bilden;
wobei die erste Elektrodenplatte (222) mehrere Biegesegmente (2221) und mehrere gestapelte erste Stapelsegmente (2222) umfasst, wobei jedes Biegesegment (2221) zwei benachbarte erste Stapelsegmente (2222) verbindet; und
**dadurch gekennzeichnet, dass** in dem nicht gefalteten Zustand der Elektrodenanordnung (22) die zweiten heißgeschmolzenen Segmente (22321) voneinander beanstandet sind und sich an Positionen befinden, die in der Längsrichtung des Separators (223) den Biegesegmenten (2221) entsprechen; und
wobei in der Längsrichtung des Separators (223) die Länge des zweiten heißgeschmolzenen Segments (22321) größer ist als die Länge des Biegesegments (2221).

2. Elektrodenanordnung (22) nach Anspruch 1, **dadurch gekennzeichnet, dass** das zweite heißgeschmolzene Segment (22321) in der Höhenrichtung des Separators (223) in Bezug auf das Biegesegment (2221) symmetrisch ist.

3. Elektrodenanordnung (22) nach einem der Ansprüche 1 bis 2, **dadurch gekennzeichnet, dass** das Biegesegment (2221) in der Dickenrichtung der Elektrodenplatte einen verdünnten Abschnitt (22211) oder einen ausgeschnittenen Abschnitt (22212) aufweist, um das Biegen der ersten Elektrodenplatte (222) zu erleichtern.

4. Elektrodenanordnung (22) nach Anspruch 3, **dadurch gekennzeichnet, dass** dann, wenn das Biegesegment (2221) einen verdünnten Abschnitt (22211) aufweist, die Länge des zweiten heißgeschmolzenen Segments (22321) in der Längsrichtung des Separators (223) 3-50 mm beträgt.

5. Elektrodenanordnung (22) nach Anspruch 3, **dadurch gekennzeichnet, dass** dann, wenn das Biegesegment (2221) einen ausgeschnittenen Abschnitt (22212) aufweist, die Länge des zweiten heißgeschmolzenen Segments (22321) in der Längsrichtung des Separators (223) 5-50 mm beträgt.

6. Elektrodenanordnung (22) nach einem der Ansprüche 1 bis 3, **dadurch gekennzeichnet, dass** in der Höhenrichtung des Separators (223) ein seitliches Ende der ersten Elektrodenplatte (222) erste Laschen (2223) aufweist, die durch den Separator (223 verlaufen, und die zweiten heißgeschmolzenen Segmente (22321) keine ersten Laschen (2223) aufweisen; und
**dadurch gekennzeichnet, dass** vorzugsweise Bereiche, die die ersten Laschen (2223) nicht aufweisen, der zweiten Kantenabschnitte (2232) auf beiden Seiten der ersten Elektrodenplatte (222) in der Dickenrichtung der Elektrodenplatte alle durch Heißschmelzen verbunden sind, um die zweiten heißgeschmolzenen Segmente (22321) zu bilden.

7. Elektrodenanordnung (22) nach einem der Ansprüche 1 bis 6, **dadurch gekennzeichnet, dass** die entsprechenden ersten Kantenabschnitte (2231) auf beiden Seiten der ersten Elektrodenplatte (222) in der Dickenrichtung der Elektrodenplatte vollständig heißgeschmolzen sind, um die ersten heißgeschmolzenen Segmente (22311) zu bilden;
und/oder
**dadurch gekennzeichnet, dass** die Länge des ersten heißgeschmolzenen Segments (22311) in der Längsrichtung des Separators (223) 1-5 mm beträgt und die Höhe des zweiten heißgeschmolzenen Segments (22321) in der Höhenrichtung des Separators (223) 1-5 mm beträgt.

8. Elektrodenanordnung (22) nach einem der Ansprüche 1 bis 7, **dadurch gekennzeichnet, dass** die erste Elektrodenplatte (222) eine Anodenplatte ist;
und/oder
**gekennzeichnet durch** eine zweite Elektrodenplatte (224) mit einer zu der ersten Elektrodenplatte (222) entgegengesetzten Polarität, wobei die zweite Elektrodenplatte (224) mehrere zweite Stapelsegmente (2241) besitzt und in einem gestapelten Zustand der Elektrodenanordnung (22) jedes zweite Stapelsegment (2241) zwischen zwei benachbarten ersten Stapelsegmenten (2222) bereitgestellt ist.

9. Verfahren zum Herstellen einer Elektrodenanordnung, **gekennzeichnet durch** die folgenden Schritte:
Bereitstellen (S1) einer ersten Elektrodenplatte;
Bereitstellen von Separatoren (S2);
Anordnen (S3) der Separatoren auf beiden Seiten der ersten Elektrodenplatte in Dickenrichtung der Elektrodenplatte und Stapeln der Separatoren und der ersten Elektrodenplatte;
Bereitstellen (S4) erster Kantenabschnitte, wovon jeder von einem Ende der ersten Elektrodenplatte in einer Längsrichtung des Separators auf dem Separator vorsteht, und Bereitstellen zweiter Kantenabschnitte, wovon jeder von einem Ende der ersten Elektrodenplatte in Höhenrichtung des Separators auf dem Separator vorsteht; und
in der Dickenrichtung der Elektrodenplatte Verbinden (S5) wenigstens eines Teils der entsprechenden ersten Kantenabschnitte auf den beiden Seiten der ersten Elektrodenplatte durch Heißschmelzen, um erste heißgeschmolzene Segmente zu bilden, und Verbinden wenigstens eines Teils der entsprechenden zweiten Kantenabschnitte auf den beiden Seiten der ersten Elektrodenplatte durch Heißschmelzen, um zweite heißgeschmolzene Segmente zu bilden;
wobei die erste Elektrodenplatte mehrere Biegesegments und mehrere gestapelte erste Stapelsegmente umfasst, wobei jedes Biegesegment zwei benachbarte erste Stapelsegmente verbindet; und in dem nicht gefalteten Zustand der Elektrodenanordnung die zweiten heißgeschmolzenen Segmente voneinander beanstandet sind und sich an Positionen befinden, die den Biegesegmenten in der Längsrichtung des Separators entsprechen; und
wobei in der Längsrichtung des Separators (223) die Länge des zweiten heißgeschmolzenen Segments (22321) größer ist als die Länge des Biegesegments (2221).

10. Herstellungsverfahren nach Anspruch 9, **dadurch gekennzeichnet, dass** für das Verbinden durch Heißschmelzen ein Heißpressen verwendet wird;
und/oder
**dadurch gekennzeichnet, dass** der Schritt des Bereitstellens der ersten Elektrodenplatte Folgendes umfasst:
Bilden mehrerer verdünnter Abschnitte an der ersten Elektrodenplatte durch Dornen oder Laserreinigen; wobei
das Verfahren ferner vorzugsweise den folgenden Schritt umfasst: Stapeln der Separatoren und der ersten Elektrodenplatte miteinander, Biegen an den mehreren verdünnten Abschnitten, um mehrere Biegesegments zu bilden, und Bilden mehrerer erster Stapelsegmente, die zwischen den mehreren Biegesegmenten gestapelt sind;
und/oder
ferner **gekennzeichnet durch**: Bereitstellen einer zweiten Elektrodenplatte und Anordnen der zweiten Elektrodenplatte zwischen gestapelten benachbarten ersten Stapelsegmenten.

11. Batteriezelle (20), **gekennzeichnet durch** die Elektrodenanordnung (22) nach einem der Ansprüche 1 bis 8 oder durch eine Elektrodenanordnung (22), die unter Verwendung des Verfahrens zum Herstellen einer Elektrodenanordnung (22) nach einem der Ansprüche 9 bis 10 hergestellt wird.

12. Batterie, **gekennzeichnet durch** mehrere Batteriezellen nach Anspruch 11.

13. Elektrische Vorrichtung, **gekennzeichnet durch** die Batterie nach Anspruch 12, wobei die Batterie konfiguriert ist, elektrische Energie zu liefern.

## Revendications

1. Ensemble d'électrode (22), **caractérisé en ce qu'**il comprend :
une première plaque d'électrode (222) ; et
des séparateurs (223) prévus sur deux côtés de la première plaque d'électrode (222) dans le sens de l'épaisseur de la plaque d'électrode et empilés avec la première plaque d'électrode (222) ; où dans un état déplié de l'ensemble d'électrode (22), le séparateur (223) a des premières parties de bord (2231) dépassant chacune une extrémité de la première plaque d'électrode (222) dans le sens de la longueur du séparateur (223), et le séparateur (223) a des deuxièmes parties de bord (2232) dépassant chacune une extrémité de la première plaque d'électrode (222) dans le sens de la hauteur du séparateur (223) ; et
dans le sens de l'épaisseur de la plaque d'électrode, les premières parties de bord correspondantes (2231) sur deux côtés de la première plaque d'électrode (222) sont au moins partiellement reliées par thermofusion pour former des premiers segments thermofusionnés (22311), et les deuxièmes parties de bords correspondantes (2232) sur deux côtés de la première plaque d'électrode (222) sont au moins partiellement reliées par thermofusion pour former des deuxièmes segments thermofusionnés (22321) ;
la première plaque d'électrode (222) comprenant plusieurs segments de flexion (2221) et plusieurs premiers segments d'empilement empilés (2222), chaque segment de flexion (2221) reliant deux premiers segments d'empilement adjacents (2222) ; et
**caractérisé en ce que**, dans l'état déplié de l'ensemble d'électrode (22), les deuxièmes segments thermofusionnés (22321) sont espacés les uns des autres et sont situés à des positions correspondant aux segments de flexion (2221) dans le sens de la longueur du séparateur (223) ; la longueur du deuxième segments thermofusionné (22321), dans le sens de la longueur du séparateur (223), étant supérieure à la longueur du segment de flexion (2221).

2. Ensemble d'électrode (22) selon la revendication 1, **caractérisé en ce que**, dans le sens de la hauteur du séparateur (223), le deuxième segment thermofusionné (22321) est symétrique par rapport au segment de flexion (2221).

3. Ensemble d'électrode (22) selon l'une quelconque des revendications 1 à 2, **caractérisé en ce que**, dans le sens de l'épaisseur de la plaque d'électrode, le segment de flexion (2221) comprend une partie amincie (22211) ou une partie découpée (22212) pour faciliter le pliage de la première plaque d'électrode (222).

4. Ensemble d'électrode (22) selon la revendication 3, **caractérisé en ce que**, lorsque le segment de flexion (2221) comprend une partie amincie (22211), la longueur du deuxième segment thermofusionné (22321) dans le sens de la longueur du séparateur (223) est de 3 à 50 mm.

5. Ensemble d'électrode (22) selon la revendication 3, **caractérisé en ce que**, lorsque le segment de flexion (2221) comprend une partie découpée (22212), la longueur du deuxième segment thermofusionné (22321) dans le sens de la longueur du séparateur (223) est de 5 à 50 mm.

6. Ensemble d'électrode (22) selon l'une quelconque des revendications 1 à 3, **caractérisé en ce que**, dans le sens de la hauteur du séparateur (223), une extrémité latérale de la première plaque d'électrode (222) a des premières pattes (2223) s'étendant à travers le séparateur (223), et les deuxièmes segments thermofusionnés (22321) évitent les premières pattes (2223) ; et, **caractérisé en ce que**, de préférence, des régions, évitant les premières pattes (2223), des deuxièmes parties de bord (2232) sur deux côtés de la première plaque d'électrode (222) dans le sens de l'épaisseur de la plaque d'électrode sont toutes reliées par thermofusion pour former les deuxièmes segments thermofusionnés (22321).

7. Ensemble d'électrode (22) selon l'une quelconque des revendications 1 à 6, **caractérisé en ce que** les premières parties de bord correspondantes (2231) sur deux côtés de la première plaque d'électrode (222) dans le sens de l'épaisseur de la plaque d'électrode sont entièrement reliées par thermofusion pour former les premiers segments thermofusionnés (22311) ;
et/ou
**caractérisé en ce que** la longueur du premier segment thermofusionné (22311) dans le sens de la longueur du séparateur (223) est de 1 à 5 mm, et la hauteur du deuxième segment thermofusionné (22321) dans le sens de la hauteur du séparateur (223) est de 1 à 5 mm.

8. Ensemble d'électrode (22) selon l'une quelconque des revendications 1 à 7, **caractérisé en ce que** la première plaque d'électrode (222) est une plaque d'anode ;
et/ou
**caractérisé en ce qu'**il comprend en outre une deuxième plaque d'électrode (224) de polarité opposée à la première plaque d'électrode (222), la deuxième plaque d'électrode (224) comprenant plusieurs deuxièmes segments d'empilement (2241), et dans un état empilé de l'ensemble d'électrode (22), chaque deuxième segment d'empilement (2241) étant disposé entre deux premiers segments d'empilement adjacents (2222).

9. Procédé de fabrication d'un ensemble d'électrode, **caractérisé en ce qu'**il comprend les étapes suivantes :
prévision (S1) d'une première plaque d'électrode ;
prévision (S2) de séparateurs ;
disposition (S3) des séparateurs sur deux côtés de la première plaque d'électrode dans le sens de l'épaisseur de la plaque d'électrode et empilement des séparateurs et de la première plaque d'électrode ;
prévision (S4) de premières parties de bord dépassant chacune une extrémité de la première plaque d'électrode dans le sens de la longueur du séparateur sur le séparateur, et prévision de deuxièmes parties de bord dépassant chacune une extrémité de la première plaque d'électrode dans le sens de la hauteur du séparateur sur le séparateur ; et
dans le sens de l'épaisseur de la plaque d'électrode, liaison par thermofusion (S5) d'au moins une partie des premières parties de bord correspondantes sur deux côtés de la première plaque d'électrode pour former des premiers segments thermofusionnés, et liaison par thermofusion d'au moins une partie des deuxièmes parties de bord correspondantes sur deux côtés de la première plaque d'électrode pour former des deuxièmes segments thermofusionnés ;
la première plaque d'électrode comprenant plusieurs segments de flexion et plusieurs segments d'empilement empilés, chaque segment de flexion reliant deux premiers éléments d'empilement adjacents ; et, dans l'état déplié de l'ensemble d'électrode, les deuxièmes segments thermofusionnés étant espacés les uns des autres et situés à des positions correspondant aux segments de flexion dans le sens de la longueur du séparateur ; et
la longueur du deuxième segments thermofusionné (22321), dans le sens de la longueur du séparateur (223), étant supérieure à la longueur du segment de flexion (2221).

10. Procédé de fabrication selon la revendication 9, **caractérisé en ce qu'**un pressage à chaud est utilisé pour la liaison par thermofusion ;
et/ou
**caractérisé en ce que** l'étape de prévision d'une première plaque d'électrode comprend :
la formation de multiples parties amincies sur la première plaque d'électrode par indentation ou nettoyage au laser ; et, de préférence,
le procédé comprenant en outre les étapes suivantes : empilement des séparateurs et de la première plaque d'électrode ensemble, pliage au niveau des multiples parties amincies pour former plusieurs segments de flexion, et formation de plusieurs premiers segments d'empilement empilés entre les multiples segments de flexion ;
et/ou
**caractérisé en ce qu'**il comprend en outre : la prévision d'une deuxième plaque d'électrode et la disposition de la deuxième plaque d'électrode entre des premiers segments d'empilements adjacents empilés.

11. Cellule de batterie (20), **caractérisée en ce qu'**elle comprend l'ensemble d'électrode (22) selon l'une quelconque des revendications 1 à 8 ou **en ce qu'**elle comprend un ensemble d'électrode (22) fabriqué au moyen du procédé de fabrication de l'ensemble d'électrode (22) selon l'une quelconque des revendications 9 à 10.

12. Batterie, **caractérisée en ce qu'**elle comprend plusieurs cellules de batterie selon la revendication 11.

13. Appareil électrique, **caractérisé en ce qu'**il comprend la batterie selon la revendication 12, laquelle batterie est configurée pour fournir de l'énergie électrique.
